## Europäisches Patentamt
## European Patent Office
## Office européen des brevets

(11) Publication number: **0 215 591**
**B1**

# EUROPEAN PATENT SPECIFICATION

(45) Date of publication of patent specification: **24.10.90**

(21) Application number: **86306590.0**

(22) Date of filing: **26.08.86**

(51) Int. Cl.⁵: **F 16 L 41/06, F 16 L 39/00, F 16 J 15/00, F 16 K 51/02**

(54) Vacuum sealing device.

(30) Priority: **16.09.85 US 776254**

(43) Date of publication of application:
**25.03.87 Bulletin 87/13**

(45) Publication of the grant of the patent:
**24.10.90 Bulletin 90/43**

(84) Designated Contracting States:
**AT BE CH DE FR GB IT LI LU NL SE**

(56) References cited:
**DE-A-2 454 898**
**US-A-2 032 862**
**US-A-3 617 026**
**US-A-3 905 396**

(73) Proprietor: **THE BABCOCK & WILCOX COMPANY**
**1010 Common Street, P.O. Box 60035**
**New Orleans, Louisiana 70160 (US)**

(72) Inventor: **Anderson, Paul Thomas**
**1042 Sheridan Drive**
**Lancaster Ohio 43130 (US)**
Inventor: **Matthews, John Clarence**
**740 King Street**
**Lancaster Ohio 43130 (US)**
Inventor: **Irwin, Lawrence**
**352 Greenfield Street**
**Lancaster Ohio 43130 (US)**
Inventor: **Paugh, Charles Eugene**
**311 Old Meadows Ct**
**Canal Winchester Ohio 43110 (US)**

(74) Representative: **Purvis, William Michael Cameron et al**
**D. Young & Co. 10 Staple Inn**
**London WC1V 7RD (GB)**

Courier Press, Leamington Spa, England.

# Description

The invention relates to a vacuum sealing device and has particular though not exclusive application to insulated steam injecting tubing, the device sealing a port that communicates with an annular space between inner and outer tubular members of the insulated steam injecting tubing, to maintain a vacuum in that space which was drawn through the port.

US-A-2 032 862 Wilkins discloses a device which can be screwed onto a flange member welded to a tank. The device has a spring wire holder for a plug, the holder being mounted at the end of a ram which can be held in a position at which the plug, held by the holder, is spaced away from the flange member and which can be released to allow the plug to seal an aperture in the tank wall within the flange member after a vacuum has been drawn in the tank. The outer end of the ram can be struck by a hammer to engage the plug more firmly in the hole. Sealing means are provided around the ram.

US-A-4 396 211 McStravick et al discloses an insulated tubular conduit for use in forming a tubing string in a subterranean well. The conduit comprises inner and outer tubing with an annular cavity formed therebetween. A fixture is provided for evacuating the gases from the annular cavity. This fixture includes a clamp extending around the exterior of the outer tubing. A passage extends radially through the fixture and communicates with an evacuation port in the outer tubing. A plug, such as a tapered pin, surrounded by an annular seal, can be inserted into this passage. A vacuum hose connected to the fixture and communicating with the passage can be connected to a vacuum pump for drawing a vacuum from the annular cavity. After a suitable vacuum has been drawn, the pin which is a tapered pin, is driven into the vacuum port to close the annular cavity.

US-A-1 472 019 Hitch discloses a double walled receptacle in the form of a bottle having an outer shell and an inner shell wherein an air chamber is provided between the inner and outer shells. A tapered air passage is formed in the outer shell. A sleeve is clamped to the receptacle and provides a passageway and communication with the tapered air passage which, in turn, provides a passage for drawing air from the air chamber. A driver bar fits within the sleeve passageway and a tapered plug is supported on the end of the driver bar. After an appropriate vacuum has been created in the chamber, the driver bar is struck with a tool to drive the plug into the tapered air passage to seal the chamber.

Other references which are of interest to the present application include.

US-A-29 582 Gill
US-A-30 440 Wildey
US-A-311 253 Mussel
US-A-1 150 242 Bartlett
US-A-1 463 723 Otsuki
US-A-1 848 319 Clifford
US-A-2 016 045 Munters
US-A-2 367 756 Cummings
US-A-3 065 583 Miller
US-A-3 240 227 Burkholder
US-A-3 406 987 Hunder et al.

According to one aspect of the invention there is provided a vacuum sealing device for plugging a port in a tube comprising:

clamping means to engage around the tube and over the port to be plugged in the tube, the clamping means having a space therein communicating with the port;

a vacuum connector connected to the clamping means and communicating with the space for drawing a vacuum in the space;

a plug formed as part of a sealing pin movable in the space between a first position spaced away from the port and a second position extending into the port; and;

drive means for driving the sealing pin from its first position to its second position whereby the plug can be sealed into the port of the tube, wherein the sealing pin further comprises a shank portion, by means of which the sealing pin is mounted on the drive means, and a breakable tab connecting the plug and the shank portion, the breakable tab being broken by the drive means to separate the plug portion from the shank portion.

None of the prior art specifications discloses the provision of a breakable tab portion between a plug portion and a shank portion of a pin which is driven into an aperture of an outer tube to seal the annulus between the outer and inner tube.

According to another aspect of the invention there is provided a method of plugging a vacuum port in a tube comprising engaging clamping means around the tube and over the port, the clamping means having a space therein with an opening communicating with the port, coupling a plug to drive means, locating the plug in the space at a first position spaced away from the port, connecting a vacuum connector to the space, drawing a vacuum in the space to draw a vacuum in the port, providing the plug as a portion of a sealing pin which further comprises a shank portion and a breakable tab connecting the plug to the shank portion and operating the drive means to drive the sealing pin from the first position to a second position in which the plug is engaged in the port thereby to break the breakable tab to break the plug away from the shank portion of the sealing pin and to leave the plug in the port.

Thus the apparatus may comprise a saddle clamp which includes an aperture that is aligned with the port and which houses a pin. The pin is insertable in the port by means of a hydraulic press. The aperture also includes a flow path for evacuation of the annular space wherein a vacuum in the annular space may be maintained during the process of inserting the pin. The shank portion of the pin co-operates with the press for driving the plug portion into the port. The end of the plug portion is tapered to a slightly smaller diameter than the body of the plug portion to aid guiding of the plug portion into the port. With a port diameter of 10 mm to 12.7 mm (0.4 to 0.5 inches), a plug portion has a diameter which is at least 0.076 mm (0.003 inches) greater than the port diameter, preferably approximately 0.15 mm (0.006 inches) greater, to provide a satisfactory interference fit for a consistently satisfactory vacuum seal. The tab portion has a sufficiently small diameter preferably about 2.36 mm (0.093 inches) so that the force from insertion of the plug portion in the port will break the tab portion.

The invention is diagrammatically illustrated by way of example with reference to the accompanying drawings in which:

Figure 1 is a sectional view taken through a vacuum sealing device according to the invention and radially through an insulated steam injection tubing to which the device is connected;

Figure 2 is a partial sectional view taken on line II—II of Figure 1; and

Figure 3 is an enlarged elevational view showing a plug of the device of Figures 1 and 2.

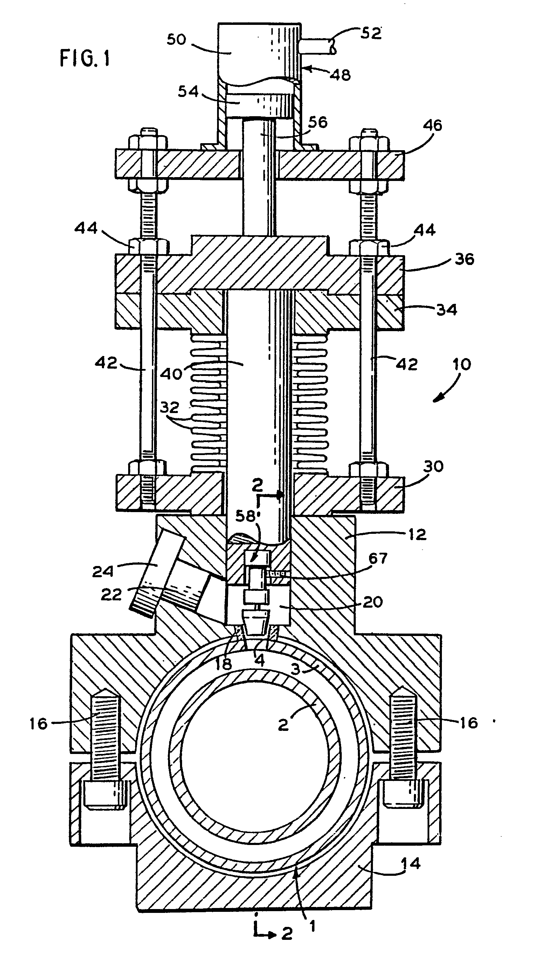

Referring to the drawings, a vacuum sealing device generally designated 10 in Figure 1 is provided for drawing a vacuum from and sealing the annular space of an insulated steam injection tubing generally designated 1. The tubing 1 includes an inner tubular member 2 and an outer tubular member 3 which define an annular space therebetween. A port 4 is provided in the outer tubular member 3 and communicates with the annular space.

The vacuum sealing device 10 includes an upper section 12 having a lower curved recess for engaging over the tubing 1, and a lower section 14 having an upper curved recess for engaging under the tubing 1. The sections 12 and 14 are bolted together by bolts 16. A sealing gasket 18 is provided in the curved recess of the upper section 12 around the port 4 for establishing a seal with an interior space 20 of the upper section 12. The space 20 has a lower opening which communicates with the port 4.

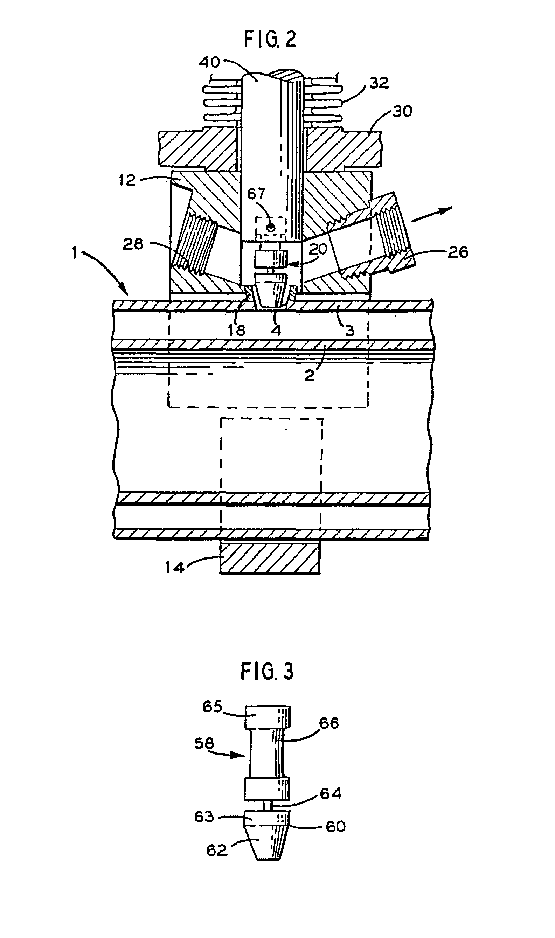

An observation passage 22 is also provided in the upper section 12, which passage 22 communicates with the space 20 and receives a lens or viewing window 24 for viewing the space 20. As shown in Figure 2, a connector 26 which can be connected to a vacuum pump is threaded into another passage in the upper section 12 which also communicates with the space 20. A further passage 28 is also provided for a vacuum sensing device which is capable of sensing the extent of vacuum in the space 20.

A first mounting plate 30 is fixed to the upper section 12 and has an opening therethrough aligned with the space 20. A flexible metal bellows 32 has its lower end connected to the plate 30. The upper end of the bellows 32 is fixed to a second mounting plate 34, as shown in Figure 1, which also has an opening therein that is aligned with the opening of the plate 30 and with the space 20. The second mounting plate 34 includes a plate portion 36 which is fixed thereto and which is firmly connected to the upper end of a pushing or centreing rod 40. The pushing rod 40 extends through the opening of the plate 34, the opening of the plate 30 and into the space 20. Through the resilient action of the bellows 32, the second mounting plate 34 can move downwardly and upwardly with respect to the first mounting plates 30 and the upper section 12. To guide this movement, a pair of guide rods 42 each extend through openings in the plates 34, 36 and have their lower ends connected to the first mounting plate 30. A stop nut 44 is threaded onto each of the rods 42 above the plate portion 36 to limit the upward movement of the second mounting plate 34.

A third mounting plate 46 is fixed to the top end of each rod 42 and is held fixed with respect to the first mounting plate 30. The third mounting plate 46 carries a piston and cylinder combination 48 which comprises a cylinder 50 having a space that can be pressurized through a connection 52, and a piston 54 movable in that space. The cylinder 50 is fixed to the third mounting plate 46. The piston 54 has a piston rod 56 which extends downwardly through an opening in the plate 46 into engagement with the plate portion 36. By pressurizing the pressure connection 52, the piston 54 and its piston rod 56 can be moved downwardly to move the second mounting plate 34 downwardly in turn compressing the bellows 32 and moving the pushing rod 40 downwardly.

A sealing pin generally designated 58 is fixed to the bottom end of the pushing rod 40. As best shown in Figure 3, the sealing pin 58 comprises a lower plug 60 and an upper shank 65. The shank 65 is connected to the plug 60 by a small diameter breakable tab 64. The plug 60 has a lower conical portion 62 and an upper cylindrical portion 63. The outer diameter of the cylindrical portion 63 is slightly larger than the inner diameter of the port 4 so that, with the plug 60 fully seated in the port 4, a good vacuum seal is established. The conical portion 62 is provided merely for guiding the plug 60 into the port 4.

The pin 58 is held in a lower recess of the pushing rod 40 by a set screw 67 which engages in a small diameter portion 66 of the shank 65.

To utilize the device 10, the bellows 32 is first compressed by pushing the plates 30 and 34 together either manually or through the aid of the piston and cylinder combination 48. This extends, at least the conical portion 62 of the plug 60, down through the lower opening of the space 20 and beyond the curved recess of the upper section 12. In this condition, the section 12 is placed over an insulated steam injection tubing 1 and the conical portion 62 of the plug 60 is located in the port 4 of the outer tubular member 3, the gasket 18 having previously been connected to the upper section for proper engagement around the port 4. The bellows 32 can then be released to allow the plate 34 to move away from the plate 30 until this motion is stopped by the stop nuts 44 on the guide rods 42. The lower section 14 is then engaged around the lower part of the tubing 1 and bolted to the upper section using the bolts 16.

A vacuum pump is connected to the connector 26 and a vacuum detector is connected to the passage 28. The vacuum pump is operated until a satisfactory vacuum is achieved within the annular space between the tubular members 2 and 3 of the insulated steam injection tubing 1.

The space in the cylinder 50 is then pressurized through the pressure connection 52 which causes downward movement of the piston 54 and its piston rod 56. This, again, moves the plate 34 downwardly, compressing the bellows 32 and simultaneously moving the pushing rod 40 downwardly. Since the sealing pin 58 is fixed to the lower end of the rod 40, the plug 60 of the pin 58 is pushed into the port 4. The pin 58 is guided by its conical portion 62 until the cylindrical portion 63 is seated within the port 4. This can be verified by viewing the space 20 through the window 24. At this point, a seal is established. The tab 64 is dimensioned so that, with the release of pressure in the cylinder 50, the resiliency of the bellows 32 withdraws the pushing rod 40, thus breaking the tab 64. The tab 64 may also be broken by the abrupt downward movement of the plug. The tab 64 is dimensioned so that it is strong enough to ensure a vacuum seal between the cylindrical portion 63 and the port 4 before it breaks however.

## Claims

1. A vacuum sealing device (10) for plugging a port (4) in a tube (1) comprising:
    clamping means (12, 14) to engage around the tube (1) and over the port (4) to be plugged in the tube (1), the clamping means (12, 14) having a space (20) therein communicating with the port (4);
    a vacuum connector (26) connected to the clamping means (12, 14) and communicating with the space (20) for drawing a vacuum in the space (20);
    a plug (60) formed as part of a sealing pin (58) movable in the space (20) between a first position spaced away from the port (4) and a second position extending into the port (4); and
    drive means (30 to 56) for driving the sealing pin (58) from its first position to its second position whereby the plug (60) can be sealed into the port (4) of the tube (1), wherein the sealing pin (58) further comprises a shank portion (65), by means of which the sealing pin (58) is mounted on the drive means (30 to 56), and a breakable tab (64) connecting the plug (60) and the shank portion (65), the breakable tab (64) being broken by the drive means (30 to 56) to separate the plug portion (60) from the shank portion (65).

2. A vacuum sealing device according to claim 1, wherein the plug (60) includes a conical part (62) tapering outwardly from a small diameter to a larger diameter and a cylindrical part (63) connected to the conical part (62) at its larger diameter, the cylindrical part (63) being connected to the shank portion (65) by the tab (64).

3. A vacuum sealing device according to claim 1 or claim 2, wherein the clamping means (12, 14) comprises an upper section (12) having a curved recess for receiving the tube (1) and a lower section (14) having a curved recess for receiving the tube (1) with means for connecting the upper section (12) containing the space (20) with the port (4), the drive means comprising a mounting plate (34) movably mounted with respect to the upper section (12), a pushing rod (40) having one end connected to the mounting plate (34) and an opposite end connected to the sealing pin (58), and confining means (32) extending between the mounting plate (34) and the upper section (12) and around the pushing rod (40) for closing the space (20) of the upper section (12) to maintain a vacuum therein, the confining means (32) being compressible and expandible to permit relative movement between the mounting plate (34) and the upper section (12).

4. A vacuum sealing device according to claim 3, wherein the confining means comprises a bellows (32).

5. A vacuum sealing device according to claim 3 or claim 4, wherein the drive means includes a cylinder (50) connected to the upper section (12) and a piston movable (54) in the cylinder (50) with a piston rod (56) engageable with the mounting plate (34) for pushing the mounting plate (34) to move the sealing pin (58) from its first position to its second position.

6. A vacuum sealing device according to any one of claims 3 to 5, including at least one guide rod (42) connected to the upper section (12), the mounting plate (34) having an opening therethrough for receiving the guide rod, the guide rod (42) extending in the direction of relative movement between the mounting plate (34) and the upper section (12).

7. A vacuum sealing device according to claim 2, wherein the drive means comprises a push rod (40) on which the shank portion (65) is mounted, a mounting plate (34) connected to the push rod (40) and movable with respect to the clamping means (12, 14), and a bellows (32) connected between the mounting plate (34) and the clamping means (12, 14) and extending around the push rod (40), the push rod (40) extending at least partly into the space (20) of the clamping means and the bellows (32) closing the space (20) for confining a vacuum therein.

8. A method of plugging a vacuum port (4) in a tube comprising engaging clamping means (12, 14) around the tube (1) and over the port (4), the clamping means (12, 14) having a space (20) therein with an opening communicating with the port (4), coupling a plug (60) to drive means (30 to 56), locating the plug (60) in the space (20) at a first position spaced away from the port (4), connecting a vacuum connector (26) to the space (20), drawing a vacuum in the space (20) to draw a vacuum in the port (4), providing the plug (60) as a portion of a sealing pin (58) which further comprises a shank portion (65) and a breakable tab (64) connecting the plug (60) to the shank portion (65) and operating the drive means (30 to 56) to drive the sealing pin (58) from the first position to a second position in which the plug is engaged in the port (4) thereby to break the breakable tab (64) to break the plug (60) away from the shank portion (65) of the sealing pin (58) and to leave the plug (60) in the port (4).

9. A method according to claim 8, including pushing the sealing pin (58) using a pushing rod (40) which is pushed at least partly into the space (20), providing a bellows (32) around the pushing rod (40) for closing the space (20), and compressing the bellows (32) at the same time with the pushing of the rod (40) for pushing the plug (60) of the sealing pin (58) into the port (4).

10. A method according to claim 8 or claim 9, including positioning the clamping means (12, 14) over the port (4) by pushing the plug (60) through the opening of the space (20) and engaging the plug (60) in the port (4) momentarily to align the clamping means, (12, 14) with the port (4).

## Patentansprüche

1. Vakuumdichteinrichtung (10), zum Einstecken eines Anschlusses (4) in ein Rohr (1) mit:

einer Klemmeinrichtung (12, 14), für den Eingriff um das Rohr (1) herum und über den Anschluß (4) hinweg, welcher in das Rohr (1) gesteckt werden soll, wobei die Klemmeinrichtung (12, 14) einen Freiraum (20) aufweist, welcher mit dem Anschluß (4) in Verbindung steht,

einem Vakumschluß (26), welcher mit der Klemmeinrichtung (12, 14) verbunden ist und mit dem Freiraum (20) in Verbindung steht, um in dem Freiraum (20) ein Vakuum zu erzeugen, einem Stecker (60), welcher als Teil eines Dichtungsstiftes (58) ausgebildet ist, der in dem Freiraum zwischen einer ersten Position, in welcher er von dem Anschluß (4) beabstandet ist und einer zweiten Position, die sich in den Anschluß (4) hinein erstreckt, bewegbar ist, und

einer Antriebseinrichtung (30 bis 56), um den Dichtungsstift (58) von seiner ersten Position in die zweite Position hinein anzutreiben, wodurch der Stecker (60) in den Anschluß (4) des Rohres (1) dicht eingebracht werden kann, wobei der Dichtstift (58) weiterhin einen Schaftbereich (65) aufweist, mit Hilfe dessen der Dichthstift an der Antriebseinrichtung (30 bis 56) befestigt ist, sowie eine brechbare Lasche (64) aufweist, welche den Stecker (60) und den Schaftbereich (65) verbindet, wobei die brechbare Lasche (64) durch die Antriebseinrichtung (30 bis 56) zerbrochen wird, um den Steckerteil (60) von dem Schaftbereich (65) zu trennen.

2. Vakuumdichteinrichtung nach Anspruch 1, wobei der Stecker (60) einen konischen Teil (62) aufweist, welcher nach außen von einem schmaleren Durchmesser zu einem größeren Durchmesser hin ausläuft, und einen zylindrischen Teil (63) aufweist, welcher mit dem konischen Teil (62) an seinem größeren Durchmesser verbunden ist, wobei der zylindrische Teil (63) mit dem Schaftbereich (65) über die Lasche (64) verbunden ist.

3. Vakuumdichteinrichtung nach Anspruch 1 oder 2, wobei die Klemmeinrichtung (12, 14) einen oberen Abschnitt (12) aufweist, der eine gekrümmte Aussparung hat, um das Rohr (1) aufzunehmen, sowie einen unteren Abschnitt (14) hat, der eine gekrümmte Aussparung hat, um das Rohr (1) aufzunehmen mit Mitteln zum Verbinden des oberen Abschnittes (12), welcher den Freiraum (20) enthält mit dem Anschluß (4), wobei die Antriebseinrichtung eine Befestigungsplatte (34) aufweist, die bezüglich des oberen Abschnittes (12) beweglich montiert ist, eine Schubstange (40) aufweist, deren eines Ende mit der Befestigungsplatte (34) verbunden ist und deren entgegengesetztes Ende mit dem Dichthstift (58) verbunden ist, und eine Begrenzungseinrichtung (32) aufweist, welche sich zwischen der Befestigungsplatte (34) und dem oberen Abschnitt (12) und um die Schubstange (40) herum erstreckt, um den Freiraum (20) des oberen Abschnittes (12) abzuschließen, um darin ein Vakuum aufrechtzuerhalten, wobei die Begrenzungseinrichtung (32) zusammendrückbar und dehnbar ist, um die Relativbewegung zwischen der Befestigungsplatte (34) und dem oberen Abschnitt (12) zu ermöglichen.

4. Vakuumdichteinrichtung nach Anspruch 3, wobei die Begrenzungseinrichtung einen Balg (32) aufweist.

5. Vakuumdichteinrichtung nach Anspruch 3 oder 4, wobei die Antriebseinrichtung einen Zylinder (50) aufweist, der mit dem oberen Abschnitt (12) verbunden ist, sowie einen Kolben (54), der in dem Zylinder (50) bewegbar ist, mit einer Kolbenstange (56), welche mit der Befestigungsplatte (34) in Eingriff bringbar ist, um die Befestigungsplatte (34) zu verschieben, um den Dichtungsstift (58) aus seiner ersten Position in seine zweite Postion zu bewegen.

6. Vakuumdichteinrichtung nach einem der Ansprüche 3 bis 5, einschließlich zumindest einer Führungsstange (42), welche mit dem oberen Abschnitt (12) verbunden ist, wobei die Befestigungs platte (34) eine Öffnung aufweist, um die Führungsstange aufzunehmen, und wobei die Führungsstange (42) sich in Richtung der Relativbewegung zwischen der Befestigungsplatte (34) und dem oberen Abschnitt (12) erstreckt.

7. Vakuumdichteinrichtung nach Anspruch 2, wobei die Antriebseinrichtung eine Schubstange (40) aufweist, auf welcher der Schaftbereich (65) montiert ist, eine Befestigungsplatte (34) aufweist, welche mit der Schubstange (40) verbunden und bezüglich der Klemmeinrichtung (12, 14) bewegbar ist, und einen Balg (32) aufweist, welcher zwischen der Befestigungsplatte (34) und der Klemmeinrichtung (12, 14) angeschlossen ist und sich um die Schubstange (40) herum erstreckt, wobei die Schubstange (40) sich zumindest teilweise in den Freiraum (20) der Klemmeinrichtung erstreckt und der Balg (32) den Freiraum (20) abschließt, um das Vakuum darin zu begrenzen.

8. Verfahren zum Einstecken eines Vakuumschlusses (4) in ein Rohr mit den Schritten:

Eingriff einer Klemmeinrichtung (12, 14) um das Rohr (1) herum und über den Anschluß (4) hinweg, wobei die Klemmeinrichtung (14) einen Freiraum (20) mit einer Öffnung hat, die mit dem Anschluß (4) in Verbindung steht, Verbinden eines Steckers (60) mit einer Antriebseinrichtung (30 bis 56), Anordnen des Steckers (60) in dem Freiraum (20) in einer ersten Position, welche von dem Anschluß (4) beabstandet ist, Verbinden eines Vakuumschlusses (26) mit dem Freiraum (20), Erzeugen eines Vakuums in dem Freiraum (20), um ein Vakuum in dem Anschlub (4) zu erzeugen, Vorsehen des Steckers (60) als Abschnitt eines Dichtungsstiftes (58), welcher weiterhin einen Schaftbereich (65) und eine brechbare Lasche (64) aufweist, die den Stecker (60) mit dem Schaftbereich (65) verbindet und Betätigen der Antriebseinrichtung (30 bis 56), um den Dichtungsstift (58) aus der ersten Position in die zweite Position anzutreiben, in welcher der Stecker in dem Anschluß (4) in Eingriff steht, und dadurch Brechen der brechbaren Lasche (64), um den Stecker (60) von dem Schaftbereich (65) des Dichtungsstiftes (58) abzubrechen und um den Stecker (60) in dem Anschluß (4) zu belassen.

9. Verfahren nach Anspruch 8, einschließlich des Schiebens des Dichtungsstiftes (58) unter Verwendung einer Schubstange (40), welche zumindest teilweise in den Freiraum (20) geschoben wird, Bereitstellen eines Balges (32) um die Schubstange (40) herum, um den Freiraum (20) abzuschließen und Zusammenpressen des Balges (32) gleichzeitig mit dem Schieben bzw. Stoßen der Stange (40), um den Stecker (60) des Dichtungsstiftes (58) in den Anschluß (4) hineinzuschieben.

10. Verfahren nach Anspruch 8 oder 9, einschließlich des Anordnens der Klemmeinrichtung (12, 14) über dem Anschluß (4) durch Schieben des Steckers (60) durch die Öffnung des Freiraumes (20) und Ineingriffbringen des Steckers (60) in dem Anschluß (4), um kurzzeitig die Klemmeinrichtung (12, 14) mit dem Anschluß (4) auszurichten.

**Revendications**

1. Dispositif d'étanchéité à vide (10) pour obturer un orifice (4) dans un tube (1) comprenant:

un moyen de serrage (12, 14) pour s'engager autour du tube et sur l'orifice (4) à obturer dans le tube (1), le moyen de serrage (12, 14) comportant un espace (20) à l'intérieur communiquant avec l'orifice (4);

un connecteur à vide (26) raccordé au moyen de serrage (12, 14) et communiquant avec l'espace (20) pour faire un vide dans l'espace (20);

un bouchon (60) formé comme partie d'une goupille d'étanchéité (58) mobile dans l'espace (20) entre une première position espacée de l'orifice (4) et une seconde position s'étendant dans l'orifice (4); et

un moyen d'entraînement (30 à 56) pour entraîner la goupille d'étanchéité (58) de sa première position à sa seconde position afin que le bouchon (60) puisse être scellé dans l'orifice (4) du tube (1), où la goupille d'étanchéité (58) comprend en outre une tige (65), au moyen de laquelle la goupille d'étanchéité (58) est montée sur le moyen d'entraînement (30 à 56), et une patte détachable (64) reliant le bouchon (60) et la tige (65), la patte cassable (64) étant rompue par le moyen d'entraînement (30 à 56) afin de séparer le bouchon (60) de la tige (65).

2. Dispositif d'étanchéité à vide selon la revendication 1, dans lequel le bouchon (60) comprend une portion conique (62) allant en augmentant vers l'extérieur d'un petit diamètre à un plus gros diamètre et une portion cylindrique (63) raccordée à la portion conique (62) à son plus gros diamètre, la portion cylindrique (63) étant reliée à la tige (65) par la patte (64).

3. Dispositif d'étanchéité à vide selon la revendication 1 ou 2, dans lequel le moyen de serrage (12, 14) comprend une section supérieure (12) comportant un évidement courbe pour recevoir le tube (1) et une section inférieure (14) comportant un évidement courbe pour recevoir le tube (1) avec un moyen pour raccorder la section supérieure (12) contenant l'espace (20) avec l'orifice (4), le moyen d'entraînement comprenant une plaque de montage (34) montée de manière amovible relativement à la section supérieure (12), une barre de poussée (40) dont une extrémité est reliée à la plaque de montage (34) et une extrémité opposée est reliée à la goupille d'étanchéité (58), et un moyen de confinement (32) s'étendant entre la plaque de montage (34) et la section supérieure (12) et autour de la barre de poussée (40) pour fermer l'espace (20) de la section supérieure (12) afin d'y maintenir un vide, le moyen de confinement (32) pouvant être comprimé et expansé afin de permettre un mouvement relatif entre la plaque de montage (34) et la section supérieure (12).

4. Dispositif d'étanchéité à vide selon la revendication 3, dans lequel le moyen de confinement comprend un soufflet (32).

5. Dispositif d'étanchéité à vide selon la revendication 3 ou 4, dans lequel le moyen d'entraînement comprend un cylindre (50) relié à la section supérieure (12) et un piston mobile (54) dans le cylindre (50) avec une tige de piston (56) pouvant être engagée avec la plaque de montage (34) pour pousser la plaque de montage (34) afin de déplacer la goupille d'étanchéité (58) de sa première position à sa seconde position.

6. Dispositif d'étanchéité à vide selon l'une quelconque des revendications 3 à 5, comprenant au moins une barre de guidage (42) raccordée à la section supérieure (12), la plaque de montage (34) comportant une ouverture au travers pour recevoir la barre de guidage, la barre de guidage (42) s'étendant dans la direction du mouvement relatif entre la plaque de montage (34) et la section supérieure (12).

7. Dispositif d'étanchéité à vide selon la revendication 2, dans lequel le moyen d'entraînement comprend une barre de poussée (40) sur laquelle la tige (65) est montée, une plaque de montage (34) raccordée à la barre de poussée (40) et mobile relativement au moyen de serrage (12, 14), et un soufflet (32) raccordé entre la plaque de montage (34) et le moyen de serrage (12, 14) et s'étendant autour de la barre de poussée (40), la barre de poussée (40) s'étendant au moins en partie dans l'espace (20) du moyen de serrage et le soufflet (32) fermant l'espace (20) afin d'y confiner un vide.

8. Procédé d'obturation d'un orifice à vide (4) dans un tube comprenant les opérations consistant à engager un moyen de serrage (12, 14) autour du tube (1) et sur l'orifice (4), le moyen de serrage (12, 14) comportant un espace (20) à l'intérieur avec une ouverture communiquant avec l'orifice (4), à coupler un bouchon (60) au moyen d'entraînement (30 à 56), à placer le bouchon (60) dans l'espace (20) à une première position espacée de l'orifice (4), à raccorder un connecteur à vide (26) à l'espace (20), à faire un vide dans l'espace (20) afin de créer un vide dans l'orifice (4), à fournir le bouchon (60) en tant que partie d'une goupille d'étanchéité (58) qui comprend en outre une tige (65) et une patte détachable (64) reliant le bouchon (60) à la tige (65) et à actionner le moyen d'entraînement (30 à 56) afin d'entraîner la goupille d'étanchéité (58) de la première position à une seconde position à laquelle le bouchon est engagé dans l'orifice (4) afin de rompre la patte détachable (64) pour détacher le bouchon (60) de la tige (65) de la goupille d'étanchéité (58) et de laisser le bouchon (60) dans l'orifice (4).

9. Procédé selon la revendication 8, comprenant les opérations consistant à pousser la goupille d'étanchéité (58) au moyen d'une barre de poussée (40) qui est poussée au moins en partie dans l'espace (20), à fournir un soufflet (32) autour de la barre de poussée (40) pour fermer l'espace (20), et à comprimer le soufflet (32) en même temps que la poussée de la barre (40) pour pousser le bouchon (60) de la goupille d'étanchéité (58) dans l'orifice (4).

10. Procédé selon la revendication 8 ou 9, comprenant les opérations consistant à placer le moyen de serrage (12, 14) sur l'orifice (4) en poussant le bouchon (60) à travers l'ouverture de l'espace (20) et à engager le bouchon (60) dans l'orifice (4) momentanément pour aligner le moyen de serrage (12, 14) avec l'orifice (4).

FIG. 1

## FIG. 2

## FIG. 3